**Europäisches Patentamt**

**European Patent Office**

**Office européen des brevets**

(19)

(11) Publication number: **0 058 308**
**A2**

(12)

# EUROPEAN PATENT APPLICATION

(21) Application number: **82100398.5**

(22) Date of filing: **21.01.82**

(51) Int. Cl.³: **C 08 L 27/16**

(30) Priority: **12.02.81 US 233739**

(43) Date of publication of application:
**25.08.82 Bulletin 82/34**

(84) Designated Contracting States:
**DE FR GB IT**

(71) Applicant: **ALLIED CORPORATION**
**Columbia Road and Park Avenue P.O. Box 2245R (Law Dept.)**
**Morristown New Jersey 07960(US)**

(72) Inventor: **Chandrasekaren, Swayambu**
**60 Crane Road**
**Mountain Lakes New Jersey 07046(US)**

(72) Inventor: **Miller, William Albert**
**1246 Evergreen Drive**
**Bridgewater New Jersey 08807(US)**

(74) Representative: **Collier, Jeremy Austin Grey et al,**
**J.A.Kemp & Co. 14, South Square Gray's Inn**
**London WC1R 5EU(GB)**

(54) Flame retardant polyvinylidene fluoride composition.

㊸ A flame resistant polyvinylidene fluoride composition comprising polyvinylidene fluoride and a flame retardant compound selected from the group consisting of tin oxides, tin phosphates, stannous oxalate and mixtures thereof.

EP 0 058 308 A2

## DESCRIPTION

### FLAME RETARDANT POLYVINYLIDENE FLUORIDE COMPOSITION

### BACKGROUND OF THE INVENTION

This invention relates to flame resistant polyvinylidene fluoride compositions.

Polyvinylidene fluoride is a thermoplastic resin suitable for compression and injection molding and extrusion. It is thermally stable at temperatures up to 343°C (650°F) and can be fabricated at 204°C (400°F) to 288°C (550°F). It is used as electrical insulation, including the insulation of high temperature wire, and chemical process equipment and as a base for long life finishes for exterior metal siding.

Polyvinylidene fluoride is considered to have good flame resistant properties, to be self-extinguishing and non-dripping, and will not support combustion in air. However, more stringent flame retardant properties are required for certain uses. It is therefore desirable to further improve the flame resistance of polyvinylidene fluoride.

### SUMMARY OF THE INVENTION

The present invention is a composition comprising polyvinylidene fluoride and an effective amount of a flame retardant additive to enhance the flame resistance of the composition. The flame retardant additive is selected from a group consisting of tin oxides, tin phosphates, stannous oxalate, and mixtures thereof.

In a preferred embodiment there is from .5% to

-2-

3% by weight of the polyvinylidene fluoride of the flame retardant tin compound. Preferably, there is an amount of the tin compound sufficient to obtain a Limiting Oxygen Index as measured by ASTM Test No. D-2836-77 of at least 65%.

Objects, features and advantages of the present invention will become apparent by reference to the following specification:

## DESCRIPTION OF THE INVENTION

Polyvinylidene fluoride is a thermoplastic resin suitable for compression and injection molding, and extrusion. It is available in various forms including powders, pellets, solutions and dispersions.

For the purposes of the present invention, polyvinylidene fluoride consists of linear chains of the repeating unit - $CH_2$- $CF_2$- as the predominant repeating unit. Minor amounts of other monomers can be copolymerized with the vinylidene fluoride monomer. Polyvinylidene fluoride has a melting point of about 171°C (340°F). It is thermally stable at 343°C (650°F) and can be fabricated at temperatures between about 204°C (400°F) to 288°C (550°F). Generally, polyvinylidene fluoride is considered not to support combustion in air, and can be self-extinguishing and non-dripping. More detailed discussion of polyvinylidene fluoride can be found in Modern Plastics Encyclopedia 1979-1980 (Volume 56, No. 10a, published by McGraw-Hill). Because of its flame resistant properties, polyvinylidene fluoride is used in applications such as insulation for high temperature wire and autoclave linings. However, there are certain applications requiring stringent flame resistance. The present invention is a composition comprising polyvinylidene fluoride and effective amounts of flame retardant additives. "Effective amounts" of flame retardant additives means the concentration of flame retardant additives found sufficient to increase flame resistance of the base polymer based on the Limiting Oxygen Index as measured by ASTM Test No.

D-2836-77. Preferably, there is an amount of the flame retardant additive sufficient to obtain a Limiting Oxygen Index of at least 65%. Polyvinylidene fluoride with no flame retardant additives has a Limiting Oxygen Index of 44%.

It has been found that the Limiting Oxygen Index of polyvinylidene fluoride can be significantly increased by the addition of flame retardant additives selected from the group consisting of tin oxides, tin phosphates, stannous oxalate and mixtures thereof. The term "tin oxides" includes stannous oxide, stannic oxide and stannic oxide hydrate. The term "tin phosphates" includes stannous phosphate (tribasic), stannous pyrophosphate, stannous hydrophosphate, stannous dihydrophosphate, stannous meta phosphate, stannic pyrophosphates and stannic oxydiphosphate. Preferred tin compounds include: stannous oxalate, stannous pyrophosphate, stannic oxide hydrate, and stannous phosphate (tribasic).

The amount of flame retardant tin compound added to the polyvinylidene fluoride is preferably in the range of about 0.1 to about 20% by weight of the polyvinylidene fluoride, more preferably between about .5% and 10%, and most preferably .5% to 3% by weight of the polyvinylidene fluoride. Of course, the particular amount of the tin compound additives depends upon the environment in which these compounds are intended to be utilized and relative cost, as well as other factors which are apparent to those skilled in the art.

In U.S. Patent No. 3,853,811, it is noted that tin compounds are effective flame retardants when chlorine is present. The tin compounds used in the composition of the present invention are effective flame retardants even without the presence of a chlorine source. Further, it has been found, as shown in the examples and comparatives below, that the fire retardant additives of the present invention cannot be directly substituted from one fluorine-containing polymer to another. This is particularly evidenced by the fact that there was little improvement in fire resistance of ethylenetetrafluoroethylene to which the tin compounds of the present invention had been added.

The polyvinylidene fluoride of the present invention may include conventional additives such as dyes, stabilizers and inert fillers.

The flame retardant additives can be uniformly mixed with the polyvinylidene fluoride or polyvinylidene fluoride compositions using conventional mechanical procedures. Preferably, the flame retardant additive is dry blended with polyvinylidene fluoride powder and the mixture thereafter blended again at temperatures above the melting point of the polymer to provide a homogeneous blend. Where the polyvinylidene fluoride is in pellet form, the flame retardant additive is added directly to the molten polyvinylidene fluoride in the mixing apparatus.

The compositions of this invention can be formed into a variety of articles by such conventional processes as extrusion, molding, coating or any other processes known to form polyvinylidene fluoride. This exceptionally high fire-resistant composition may be used, for example, in clothing, film, electrical insulation coatings and paints to provide flame resistant products suitable for use in oxygen enriched atmospheres.

Several examples are set forth below to illustrate the nature of the invention and the manner of carrying it out. However, the invention should not be considered as being limited to the details thereof.

### EXAMPLES

In the Examples and Comparatives summarized in the Table below, the following preparation and testing procedures were followed.

In the general procedure for preparation of the blends, the polymer and the flame retardant additive were physically blended by ball milling for 3 hours. The mixtures were then melt blended in a Brabender Plastigraph at 250°C for 15 minutes using a 50 revolutions per minute mixing speed.

The melt blended composition was compression molded into 15.24 cm x 6.4 cm x 0.32 cm (6" x 2.5" x 1/8") plaques at 250°C and 88,964N (20,000 pounds) load using a Carver laboratory hydraulic press. The hot mold was then cooled to room temperature in a cold water jacketed Carver press under a 44,448N (10,000 pound) load. The molded plaque is then cut into 8 pieces, each 15.24 cm x 0.64 cm x 0.32 cm (6" x 1/4" x 1/8") bars for the Limiting Oxygen Index test.

The above prepared bars were tested on the Limiting Oxygen Index test, ASTM standard D-2863-77. This method provides for measuring of the minimum concentrations of oxygen in a flowing mixture of oxygen and nitrogen that will just support flaming combustion of plastics. The measurement used is the minimum concentration of oxygen, expressed as a volume percent, in a mixture of oxygen and nitrogen that will just support combustion of a material initially at room temperature. The method is described in detail by ASTM D-2863-77. Briefly, the minimum concentration of oxygen in a mixture of oxygen and nitrogen flowing upward in a test column that will just support combustion is measured under equilibrium conditions of candle-like burning. The equilibrium is established by the relation between the heat generated from the combustion of the specimen and the heat lost to the surroundings as measured by one or the other of two arbitrary criteria, namely a time of burning or a length of burning of the specimen burned. This point is approached from both sides of the critical oxygen concentration in order to establish the Oxygen Index.

The polyvinylidene fluoride used in the following Examples is Kynar™ produced by the Pennwalt Co. Kynar has a specific gravity of 1.75-1.78 g/ml (ASTM D-792); a melting point of 156-168°C (ASTM D-3418);

and a Limiting Oxygen Index of 44% (ASTM D-2863-77). Comparatives 1 and 2 contained ethylene tetrafluoroethylene copolymer (ETFE) produced by the Du Pont Co. as Tefzel™. Tefzel has a specific gravity of 1.70 g/ml (ASTM D-792); a melting temperature of 270°C; and a Limiting Oxygen Index of 30% (ASTM D-2863-77). The Tefzel was blended at 300°C. Comparatives 3 and 4 contained ethylene chlorotrifluoroethylene (ECTFE) produced by Allied Chemical Corp. as HALAR™ 300. HALAR 300 has a specific gravity of 1.681.69 g/ml (ASTM D-792); a melting temperature of 245°C; and a Limiting Oxygen Index of 60% (ASTM D-2863-77). The HALAR 300 was blended at 275°C.

In the Table to follow, the percent of the additive is weight percent based on the polymer.

## Table

| | | Polymer | Additive | Limiting Oxy. Index (%) |
|---|---|---|---|---|
| | Comp. 1 | $PVF_2$ | -- | 44 |
| | Comp. 2 | $PVF_2$ | 1% antimony oxide | 45-50 |
| | Comp. 3 | ETFE | 10% stannous oxalate | 37 |
| | Comp. 4 | ETFE | 10% stannous pyrophosphate | 36.5 |
| | Comp. 5 | ECTFE | 10% stannous oxalate | 78.0 |
| | Comp. 6 | ECTFE | 10% stannous pyrophosphate | 76.0 |
| | Ex. 1 | $PVF_2$ | .5% stannous oxalate | 70 |
| | Ex. 2 | $PVF_2$ | 1.0% stannous oxalate | 79 |
| | Ex. 3 | $PVF_2$ | 2.5% stannous oxalate | 73 |
| | Ex. 4 | $PVF_2$ | 5.0% stannous oxalate | 74 |
| | Ex. 5 | $PVF_2$ | 10.0% stannous oxalate | 71.1 |
| | Ex. 6 | $PVF_2$ | 2.5% stannous pyrophosphate | 68 |
| | Ex. 7 | $PVF_2$ | 5.0% stannous pyrophosphate | -- |
| | Ex. 8 | $PVF_2$ | 10.0% stannous pyrophosphate | 68.3 |
| | Ex. 9 | $PVF_2$ | 2.5% stannic oxide hydrate | 70.0 |
| | Ex. 10 | $PVF_2$ | 5.0% stannic oxide hydrate | -- |
| | Ex. 11 | $PVF_2$ | 1.0% stannous oxide | 73 |

As is apparent from the results listed in the Table polyvinylidene fluoride compositions, including stannous oxalate, stannous pyrophosphate, and stannous oxide, exhibit substantial increases in Limiting Oxygen Index over polyvinylidene fluoride without the flame retardant additives of the present invention. Reviewing the Comparatives, it is of particular interest to note that the flame retardant additives of the present invention cannot readily be substituted from one fluoropolymer to another as is evidenced by Comparatives 3 and 4 showing the relatively low Limiting Oxygen Index when stannous oxalate or stannous pyrophosphate were added to ethylene tetrafluoroethylene. Further, it is noted that the ethylene chlorotrifluoroethylene, which contains chlorine, exhibited the highest Limiting Oxygen Index.

-8-

While exemplary embodiments of the invention have been described, the true scope of the invention is to be determined from the following claims:

What is claimed is:

1. A composition comprising polyvinylidene fluoride, and an effective amount of a flame retardant additive selected from the group consisting of tin oxides, tin phosphates, stannous oxalate and mixtures thereof.

2. The composition as recited in claim 1 wherein the flame retardant additive is present in an amount from about 0.1 to about 20 percent by weight of the polyvinylidene fluoride.

3. The composition as recited in claim 1 wherein the flame retardant additive is present in an amount from about .5% to about 3.0% by weight of the polyvinylidene fluoride.

4. The composition as recited in claim 1 wherein the flame retardant additive is selected from the group consisting of stannous oxide, stannic oxide, stannic oxide hydrate, stannous phosphate (tribasic), stannous pyrophosphate, stannous hydrophosphate, stannous dihydrophosphate, stannous meta phosphate, stannic pyrophosphates and stannic oxydiphosphate.

5. The composition as recited in claim 1 wherein the flame retardant is selected from the group consisting of: stannous oxalate, stannous pyrophosphate, stannous oxide hydrate and stannous oxide.

6. The composition as recited in claim 1 wherein there is an amount of the flame retardant additive sufficient to obtain a Limiting Oxygen Index, as measured by ASTM Test No. D-2836-77 of at least 65%.

7. A method of improving the fire resistance of polyvinylidene fluoride compositions comprising the steps of uniformly blending an effective amount of a flame retardant additive selected from the group consisting of tin oxides, tin phosphates, stannous oxalate and mixtures thereof.

8. The method of claim 7 wherein the step of uniformly blending further comprises:

dry blending the polyvinylidene fluoride with

-10-

the flame retardant additive, and

melt blending the dry blended mixture.

9.    The method as recited in claim 13 wherein there is an amount of the flame retardant additive sufficient to obtain a Limiting Oxygen Index, as measured by ASTM Test No. D-2836-77 of at least 65%.